# EUROPÄISCHE PATENTSCHRIFT

(11) **EP 0 738 376 B1**
(45) Veröffentlichungstag und Bekanntmachung des Hinweises auf die Patenterteilung: **18.06.1997**
(21) Anmeldenummer: 95906918.8
(22) Anmeldetag: 07.01.1995
(51) Int. Cl.: F16D 65/12, F16D 69/02

(54) **BREMSSCHEIBE FÜR SCHEIBENBREMSEN VON SCHIENENFAHRZEUGEN**
BRAKE DISK FOR DISK BRAKES OF RAIL VEHICLES
DISQUE DE FREIN POUR FREINS A DISQUE DE VEHICULES FERROVIAIRES

(30) Priorität: 14.01.1994 DE 4400896
(43) Veröffentlichungstag der Anmeldung: 23.10.1996
(73) Patentinhaber: Bergische Stahl-Industrie, D-42859 Remscheid (DE)
(72) Erfinder: DELLMANN, Torsten, D-50737 Köln (DE); LEHMANN, Wolfgang, D-42859 Remscheid (DE); RUPPERT, Helmut, D-42857 Remscheid (DE); ZEUNER, Hans, D-42857 Remscheid (DE)
(74) Vertreter: Dahlkamp, Heinrich-Leo
(86) Internationale Anmeldenummer: EP9500053
(87) Internationale Veröffentlichungsnummer: WO9519510

(56) Entgegenhaltungen:
- EP-A- 0 141 501
- EP-A- 0 351 237
- EP-A- 0 375 025
- WO-A-89/07662
- DE-B- 1 236 797
- US-A- 5 183 632
- Mondolfo L.F.,"Aluminium Alloys: Structure and Properties", 1976, Butterworths, (London) Seite 759 - Seite 774, besonders Seiten 759, 764, 766, 767, 769

## Beschreibung

Die Erfindung bezieht sich auf eine Bremsscheibe für Scheibenbremsen von Schienenfahrzeuge als Monoblockscheibe oder als aus Nabe und Reibring zusammengesetzte Scheibe, die vorzugsweise innenbelüftet ist.

Bremsscheiben für Scheibenbremsen, insbesondere Wellenbremsscheiben für Schienenfahrzeuge bestehen üblicherweise aus Gußeisen mit Lamellengraphit oder Kugelgraphit oder aus Stahlguß.

Bei den heutigen Hochgeschwindigkeitszügen stellt die hohe Anzahl und das erhebliche Gewicht der Bremsscheiben ein Problem dar. Man ist daher bemüht, Bremsscheiben mit hoher Leistung und geringerem Gewicht zu verwenden, insbesondere da die Bremsscheiben ungefederte Massen sind.

Aus der EP 0375025 A1 ist ein Gußleichtwerkstoff auf der Basis von Aluminium mit einem Zusatz von 5 bis 25 Masse-% Mg-Silizid bekannt, der sich für die Herstellung von Formkörpem mit verbesserter Warmfestigkeit, Thermoschockfestigkeit und Dauerschwingfestigkeit eignen soll. Dieser Werkstoff ist dabei insbesondere für die Kolben von Verbrennungsmotoren vorgesehen.

In der EP 0351237 ist als Bremsscheibenmaterial für Eisenbahnwagen eine Aluminiumbasislegierung, vorzugsweise Al-Mg, mit härtenden Partikeln aus Aluminiumoxyd, Al₂O₃ oder SiC vorgeschlagen worden. Einige dieser Werkstoffe wurden für massive Radbremsscheiben mit einer Dicke von 25 bis 30 mm und einem Durchmesserbereich bis 565 mm getestet. Diese Legierungen haben sich allerdings, insbesondere bei größeren Bremsscheiben als nicht praktikabel erwiesen. Die Einlagerung der härtenden Partikel in die Aluminiumbasislegierung kann Probleme bereiten, da sie nur unter bestimmten Bedingungen möglich ist.

Der Erfindung liegt daher die Aufgabe zugrunde, eine Bremsscheibe der eingangs angegebenen Art mit hoher Leistung und Möglichst geringem Gewicht vorzuschlagen, bei der auf die Einlagerung der härtenden Partikel verzichtet werden kann.

Die Lösung dieser Aufgabe ist im Kennzeichen des Anspruches 1 angegeben.
Die Unteransprüche 2 bis 6 enthalten sinnvolle Ausführungsformen dazu. Es hat sich überraschenderweise gezeigt, daß die übereutektischen Aluminiumsiliziumlegierungen beim Erstarren aus der Schmelze kristalline Siliziumpartikel abscheiden, die wegen ihrer Härte an der Reiboberfläche verschleißmindernd wirken. Bei dem erfindungsgemäßen Anteil von 15 bis 25 Gew% Si können die erforderlichen Festigkeiten (Wärme-, Thermoschock- und Dauerschwingfestigkeit) erreicht werden, ohne daß keramisch härtende Partikel in der Legierung enthalten sind.

Es hat sich gezeigt, daß die von den herkömmlichen Bremsscheiben aus Gußeisen mit Lamellengraphit oder Kugelgraphit an sich bekannten Abmessungen und Gewichtsverhältnisse für die neuartigen Bremsscheiben aus Aluminium nicht übernommen werden können. Zur Erreichung vergleichbarer Leistungswerte, insbesondere eines ausreichenden Wärmespeichervermögens bei Stoppbremsungen wird erfindungsgemäß daher vorgeschlagen, daß die Masse des oder der Reibringe etwa 0,45 bis 0,55 der Masse von bisher üblichen Fe-Legierungen beträgt. Dies kann insbesondere dadurch erreicht werden, daß die Dicke der Reibringe wesentlich vergrößert wird. Bei einer innenbelüfteten Bremsscheibe mit einer Gesamtbreite von 60 bis 200 mm, vorzugsweise 80 bis 130 mm kann zweckmäßigerweise die Gurtdicke der Reibringe je 20 bis 50 mm, vorzugsweise 30 bis 40 mm betragen. Im Hinblick auf eine ausreichende Kühlung der Räume zwischen den Reibringen kann außerdem das Verhältnis von Lüftungskanalbreite zur Gurtdicke eines Reibringes 0,5 bis 2, vorzugsweise 0,8 bis 1,4 betragen.

Schließlich hat es sich bei einem nicht belüfteten, massiv ausgebildeten Reibring mit einem Durchmesser von 300 bis 1000 mm als günstig erwiesen, wenn das Verhältnis von Durchmesser zur Gurtdicke im Bereich von 8 bis 12, vorzugsweise 10 liegt.

In das Gußgefüge können außerdem auch an sich bekannte Verstärkungselemente aus Porenkeramik integriert sein.

Es hat sich gezeigt, daß bei Verwendung eines auf den erfindungsgemäßen Werkstoff für die Reibringe angepaßten Werkstoff für die Bremsbeläge sich an der Reibfläche zwischen Reibring und Bremsbelag trotz eines gewissen Abriebs immer wieder eine besonders widerstandsfähige Oberflächenschicht bildet.
Zur Vermeidung einer ungünstigen gegenseitigen Beeinflussung der Materialien der Reibpartner Bremsring und Bremsbelag kann auch der Bremsbelag im wesentlichen aus demselben Material bestehen wie der Bremsring oder auch die gesamte Bremsscheibe.

Die Erfindung wird anhand der beigefügten Figuren 1 bis 4 beispielsweise näher erläutert.
- Fig. 1: zeigt im Querschnitt einen Teil einer aus Nabe und Reibring zusammengesetzten belüfteten Wellenbremsscheibe.
- Fig. 2: zeigt entsprechend Fig. 1 eine nicht belüftete Wellenbremsscheibe.
- Fig. 3: zeigt entsprechend eine belüftete Monoblockscheibe.
- Fig. 4: zeigt entsprechend eine nicht belüftete Monoblockscheibe.

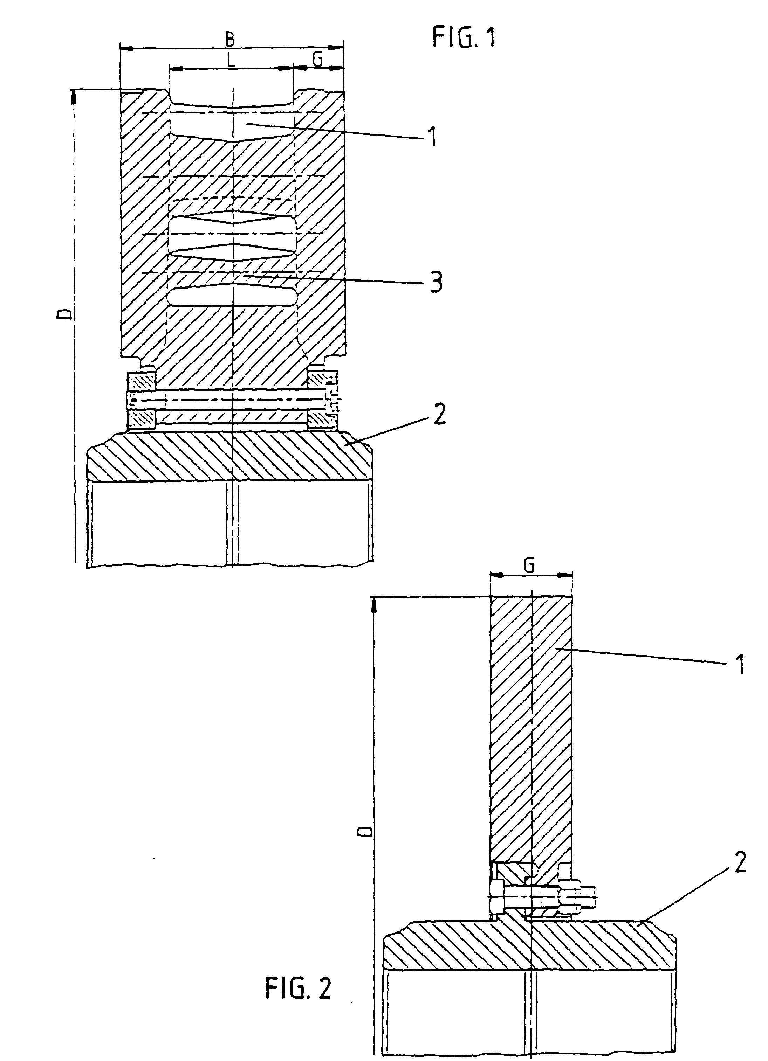

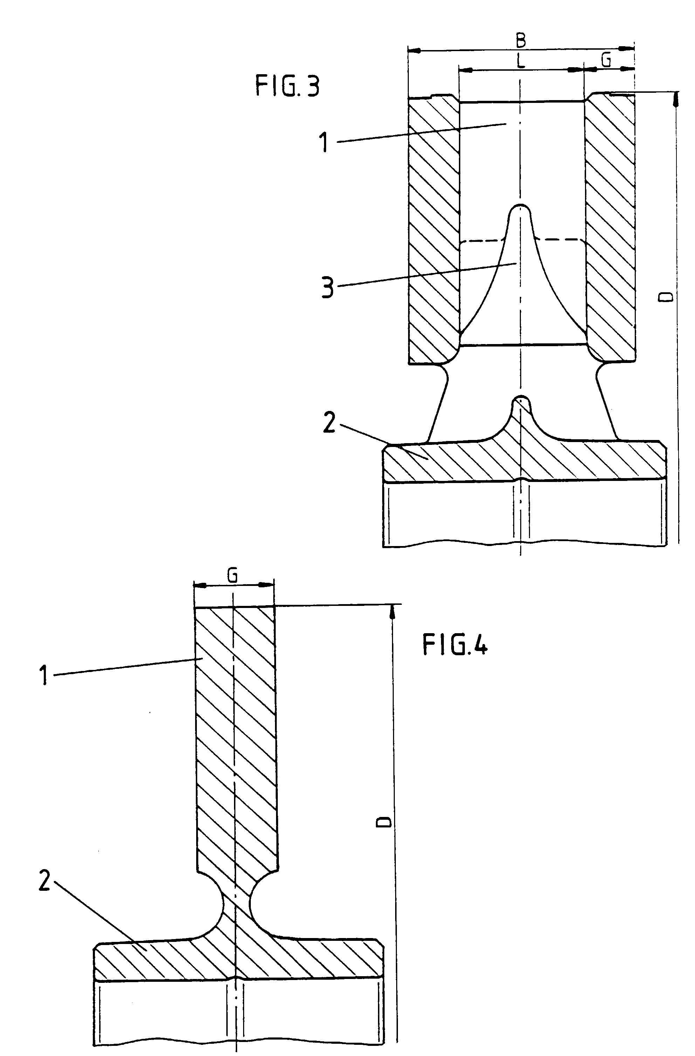

In den Figuren 1 bis 4 sind Wellenbremsscheiben dargestellt, von denen insbesondere bei Hochgeschwindigkeitszügen mehrere auf einer Achse angeordnet werden können. Nach den Figuren 1 und 2 sind Reibring 1 und Nabe 2 über geeignete Schraub- oder Steckverbindungen miteinander verbunden. In den Figuren 3 und 4 sind sogenannte Monoblockscheiben dargestellt, bei denen Reibring 1 und Nabe 2 aus einem Stück gegossen sind. Die Figuren 1 und 3 zeigen sogenannte innenbelüftete, mit zwei Bremsflächen ausgestattete Reibringe, wobei zwischen den Reibringen Kühlrippen 3 angeordnet sind. Gegenüber üblichen innenbelüfteten Wellenbremsscheiben aus Gußeisen weisen diese Bremsscheiben eine erheblich größere Gurtdicke G auf. Bei einer an sich bekannten Gesamtbreite B einer innenbelüfteten Bremsscheibe von 60 bis 200 mm, vorzugsweise 80 bis 130 mm wird erfindungsgemäß eine Gurtdicke G der Reibringe von 20 bis 50 mm, vorzugsweise 30 bis 40 mm vorgeschlagen. Es hat sich darüber hinaus als günstig erwiesen, wenn das Verhältnis von Lüftungskanalbreite L zur Gurtdicke G eines Reibringes 0,5 bis 2, vorzugsweise 0,8 bis 1,4 beträgt.

Bei einem nichtbelüfteten Reibring, wie er in den Figuren 2 und 4 dargestellt ist, mit einem an sich bekannten Außendurchmesser D von 300 bis 1000 mm soll erfindungsgemäß das Verhältnis von Durchmesser D zu Gurtdicke G im Bereich von 8 bis 12, vorzgusweise 10 liegen.

Zur Verbindung der Nabe 2 mit dem Reibring 1 nach den Figuren 1 und 2 hat es sich als günstig erwiesen, in der Verbindungsfläche zwischen Reibring 1 und Nabe 2 in die Aluminiumscheibe Eisenplatten einzugießen, so daß bei einer eventuellen radialen Verschiebung zwischen Reibring 1 und Nabe 2 aufgrund der Temperaturunterschiede die Gleitfläche zwischen diesen beiden aus einer widerstandsfähigeren Eisen-Eisen-Paarung besteht.

## Patentansprüche

1. Bremsscheibe für Scheibenbremsen von Schienenfahrzeugen als Monoblockscheibe oder als aus Nabe und Reibringen zusammengesetzte Scheibe, **dadurch gekennzeichnet,** daß die Monoblockscheibe oder bei der zusammengesetzten Scheibe zumindest der Reibring (1), aus einer verschleißbeständigen AlSi-Basislegierung mit 15 bis 25 Gew% Si besteht.

2. Bremsscheibe nach Anspruch 1, **dadurch gekennzeichnet**, daß bei einer aus Nabe (2) und Reibring (1) zusammengesetzten Bremsscheibe die Kühlrippen (3) und/oder die Nabe (2) aus der AlSi-Basislegierung besteht.

3. Bremsscheibe nach Anspruch 1 oder **2, dadurch gekennzeichnet**, daß in das Gußgefüge Verstärkungselemente aus Porenkeramik integriert sind.

4. Bremsscheibe nach den Ansprüchen 1, 2 oder 3 mit einer Innenbelüftung, **dadurch gekennzeichnet**, daß bei einer Gesamtbreite (B) von 60 bis 200 mm, vorzugsweise 80 bis 130 mm, die Gurtdicke (G) der Reibringe 20 bis 50 mm, vorzugsweise 30 bis 40 mm, beträgt.

5. Bremsscheibe nach Anspruch 4, **dadurch gekennzeichnet,** daß das Verhältnis von Lüftungskanalbreite (L) zur Gurtdicke (G) eines Reibringes 0,5 bis 2, vorzugsweise 0,8 bis 1,4, beträgt.

6. Bremsscheibe nach Anspruch 1, 2 oder 3, **dadurch gekennzeichnet**, daß bei einem nichtbelüfteten Reibring mit einem Außendurchmesser (D) von 300 bis 1000 mm das Verhältnis von Durchmesser (D) zu Gurtdicke (G) im Bereich von 8 bis 12, vorzugsweise 10, liegt.

## Claims

1. Brake disk for the disk brakes of rail vehicles designed as monobloc disk or as a disk formed by a hub and friction rings, **characterized in that** the monobloc disk or, in case of the composite disk, at least the friction ring (1) consists of a wear resistant AlSi base alloy material containing 15 to 25 % by weight of Si.

2. Brake disk according to Claim 1, **characterized in that** in the case of a brake disk consisting of hub (2) and friction ring (1) the cooling ribs (3) and/or hub (2) consist of the AlSi base alloy.

3. Brake disk according to Claims 1 or 2, **characterized in that** reinforcing elements of porous ceramic material have been integrated into the casting structure.

4. Brake disk according to Claim 1, 2 or 3 provided with inner ventilation, **characterized in that** at a total width (B) of 60 to 200 mm, preferably 80 to 130 mm, the chord thickness (G) of the friction rings is 20 to 50 mm, preferably 30 to 40 mm.

5. Brake disk according to Claim 4, **characterized in that** the relation between ventilation duct width (L) and chord width (G) of a friction ring is 0.5 to 2, preferably 0.8 to 1.4.

6. Brake disk according to Claims 1, 2 or 3, **characterized in that** for a non-ventilated friction ring of an outer diameter (D) between 300 and 1000 mm the diameter (D) to chord thickness (G) relation is in the range of 8 to 12, preferably 10.

## Revendications

1. Disque de frein pour freins à disque de véhicules ferroviaires sous forme de disque monobloc ou de disque constitué par un moyeu et des bagues de friction **caractérisé en ce que** le disque monobloc ou dans le cas du disque assemblé au moins la bague de friction (1) est composé d'un alliage résistant à l'usure à base de AlSi avec 15 à 25% en poids de Si.

2. Disque de frein selon la revendication1 **caractérisé en ce que** dans le cas d'un disque de frein constitué par un moyeu (2) et une bague de friction (1), les ailettes de refroidissement (3) et/ou le moyeu (2) sont composés d'un alliage à base de AlSi.

3. Disque de frein selon la revendication 1 ou 2 **caractérisé en ce que** les éléments de renforcement intégrés dans la structure brute de coulée sont en céramique poreuse.

4. Disque de frein selon les revendications 1 ou 2 ou 3 avec ventilation intérieure **caractérisé en ce que** pour une largeur totale (B) de l'ordre de 60 à 200 mm, de préférence entre 80 et 130 mm, l'épaisseur de la membrure (G) des bagues de friction est de l'ordre de 20 à 50 mm et de préférence entre 30 et 40 mm.

5. Disque de frein selon la revendication 4, **caractérisé en ce que** le rapport entre la largeur du canal de ventilation (L) et la largeur de la membrure (G) d'une bague de friction est de l'ordre de 0,5 à 2 et de préférence entre 0,8 et 1,4.

6. Disque de frein selon la revendication 1, 2 ou 3 **caractérisé en ce que** dans le cas d'une bague de friction non ventilée avec un diamètre extérieur (D) de l'ordre de 300 à 1000 mm, le rapport entre le diamètre (D) et l'épaisseur de la membrure (G) est situé entre 8 et 12 et est de préférence 10.
